**Europäisches Patentamt**

**European Patent Office**

**Office européen des brevets**

(19)

(11) Numéro de publication : **0 466 535 A1**

## (12) DEMANDE DE BREVET EUROPEEN

(21) Numéro de dépôt : **91401629.0**

(22) Date de dépôt : **18.06.91**

(51) Int. Cl.⁵ : **B60C 23/00**

(30) Priorité : **12.07.90 FR 9008875**

(43) Date de publication de la demande :
**15.01.92 Bulletin 92/03**

(84) Etats contractants désignés :
**DE ES IT**

(71) Demandeur : **REGIE NATIONALE DES USINES
RENAULT S.A.
34, Quai du Point du Jour
F-92109 Boulogne Billancourt (FR)**

(72) Inventeur : **Neyrat, Pierre
16, rue Louis Saillant
F-91290 La Norville (FR)**
Inventeur : **Crosnier, Sabine
11, rue Carpeaux
F-75018 Paris (FR)**

(74) Mandataire : **Ernst-Schonberg, Michel et al
REGIE NATIONALE DES USINES RENAULT
SA, Sce 0267, 860, quai de Stalingrad
F-92109 Boulogne Billancourt Cédex (FR)**

(54) **Procédé de détection du sous-gonflage d'un pneumatique.**

(57)    On calcule une fonction linéaire des différences des puissances quadratiques des vitesses angulaires des roues des première et deuxième paires de roues d'un véhicule automobile, respectivement et on tire de la position de la valeur de la fonction par rapport à au moins une valeur prédéterminée, une indication quant à la présence éventuelle d'un pneumatique sous-gonflé sur l'un des essieux. Avantageusement on constitue cette fonction en premier critère (CR1) de détection et on combine les indications fournies par ce premier critère avec celles tirées d'un deuxième critère (CR2) sensible à l'essieu comportant au moins un pneumatique sous-gonflé, pour détecter la position d'un pneumatique sous-gonflé et estimer l'importance du sous-gonflage.

```
┌──────────────────────────────────┐
│  RECEPTION DES CRITERES          │
│       n°1 & n°2                   │
└──────────────────────────────────┘
           ↓
┌──────────────────────────────────────┐
│ DEGONFLAGE 1=A1*CR1+B1*CR2           │
│ DEGONFLAGE 2=A2*CR1+B1*CR2           │
│ DEGONFLAGE 3=A3*CR1+B2*CR2           │
│ DEGONFLAGE 4=A4*CR1+B2*CR2           │
└──────────────────────────────────────┘
           ↓
┌──────────────────────────────────────┐
│ POUR TOUS LES DEGONFLAGES            │
│      (i=1 à 4)                        │
│ SI DEGONFLAGE(i)<0                    │
│    ALORS                              │
│       DEGONFLAGE(i)=0                 │
│ PRESSION(i)=PO(i)-DEGONFLAGE(i)      │
└──────────────────────────────────────┘
```

FIG.:7

EP 0 466 535 A1

La présente invention est relative à un procédé de détection du sous-gonflage d'un pneumatique équipant l'une quelconque des roues d'un véhicule automobile et, plus particulièrement, à un tel procédé basé sur l'observation des vitesses angulaires des roues du véhicule.

Le sous-gonflage d'un pneumatique peut provoquer l'éclatement de celui-ci, dans certaines conditions de conduite. Un tel éclatement met gravement en danger la sécurité des personnes embarquées dans le véhicule. Même en l'absence d'éclatement, le sous-gonflage présente l'inconvénient d'accroître la consommation de carburant du véhicule et la rapidité d'usure du pneumatique. Pour toutes ces raisons on a proposé d'installer dans les véhicules automobiles de moyens propres à permettre une surveillance automatique, continue ou périodique, de la pression régnant dans les pneumatiques équipant ces véhicules. Une première solution consiste, de manière évidente, à installer, sur chaque pneumatique, un capteur de pression et, éventuellement, un capteur de température pour transmettre des signaux à des moyens de calcul prenant en compte divers phénomènes dynamiques susceptibles d'affecter eux aussi, de manière transitoire par exemple, la pression dans les pneumatiques.

Ces moyens de surveillance de la pression des pneumatiques n'ont pas connu le succès escompté du fait du coût de l'installation de capteurs et de la complexité des moyens de transmission des signaux captés, qui doivent supporter l'environnement difficile d'un véhicule automobile, affecté de vibrations, de parasitage, de variations de température, de projections d'eau, de boue, etc....

On a aussi pensé à baser la détection du sous-gonflage d'un pneumatique sur l'observation des vitesses angulaires des roues du véhicule. Si, par hypothèse, l'un des pneumatiques d'un véhicule est sous-gonflé, le rayon de roulement de ce pneumatique diminue. Cependant, la vitesse linéaire V au sol du pneumatique restant égale à celle des autres pneumatiques normalement gonflés, on conçoit que la vitesse angulaire $\Omega$ de la roue de rayon de roulement $\underline{R}$, ($V=R\Omega$), portant le pneumatique sous-gonflé va s'accroître par rapport aux vitesses angulaires des autres roues, quand $\underline{R}$ diminue du fait du sous-gonflage.

On décrit dans la demande de brevet français No. 2 568 519 un dispositif avertisseur de sous-gonflage d'un pneumatique qui fait application de cette observation. On décrit aussi dans la demande de brevet européen No. 291 217 un procédé de détection de sous-gonflage, de la même famille. Dans les deux cas on dispose sur chacune des quatre roues d'un véhicule automobile, de tourisme par exemple, un capteur de vitesse angulaire qui délivre un signal à des moyens de traitement de signaux propres à mettre en évidence la variation de vitesse angulaire mentionnée plus haut, de manière à commander sélectivement une alarme visuelle ou sonore, par exemple.

On notera qu'une telle solution est attrayante en ce qu'elle permet d'utiliser des capteurs de vitesse de bonne fiabilité, déjà largement utilisés dans les véhicules équipés de dispositifs d'antiblocage de roues, tels que les capteurs à réluctance magnétique variable. Dans un véhicule déjà équipé d'un tel dispositif la solution est en outre particulièrement économique car elle ne demande alors, pour être mise en oeuvre, que des moyens logiciels supplémentaires implantés dans le calculateur du dispositif d'antiblocage, et les moyens d'alarme mentionnés plus haut.

Par contre cette solution oblige à surmonter une difficulté majeure, qui tient au fait que la variation du rayon de roulement (et donc de la vitesse angulaire) induite par un sous-gonflage d'un pneumatique (à carcasse radiale par exemple) est inférieure d'un ordre de grandeur aux variations normalement induites par certains phénomènes de la dynamique du véhicule, sur ces pneumatiques. De tels transferts résultent par exemple du freinage ou de l'accélération du véhicule, du braquage des roues, d'une circulation du véhicule sur une route en pente montante ou descendante, bombée ou en virage, etc... On a pu ainsi mesurer que la variation relative de vitesse angulaire due à un sous-gonflage de 0,2 bar par rapport à la pression de gonflage normale est de l'ordre de 0,1 % alors que la variation relative due, par exemple, au passage du véhicule dans un virage d'un rayon de courbure de 30 mètres, même à faible vitesse, est de 5 % environ.

Pour tenter d'éliminer l'influence de ces phénomènes qui pourraient autrement masquer le sous-gonflage à détecter et provoquer des déclenchements erratiques des alarmes prévues, on propose dans la demande de brevet français précitée d'utiliser un effet de moyenne, sur une distance prédéterminée, par exemple de 20 km. Dans la demande de brevet européen précitée, on propose de supprimer toute indication quant à l'occurrence éventuelle du sous-gonflage d'un pneumatique quand l'accélération latérale ou axiale du véhicule dépasse des seuils prédéterminés. Ces solutions empêchent le conducteur du véhicule de disposer d'une alarme fiable à tout instant, ce qui est particulièrement gênant en cas de dégonflage par crevaison.

Par ailleurs le procédé de détection mis en oeuvre aussi bien dans l'une que dans l'autre des demandes précitées est essentiellement basé sur l'observation de la différence des vitesses angulaires moyennes des roues situées sur les deux diagonales du quadrilatère de sustentation du véhicule, respectivement. Or, en virage, la somme des distances parcourues par des roues diagonalement opposées n'est qu'approximativement égale à celle des roues de l'autre diagonale. Cette approximation rejaillit défavorablement sur la précision des indications que l'on peut recueillir par ce procédé de détection alors même que ces indications doivent révéler un phénomène dont l'amplitude est d'un ordre de grandeur inférieure à celles d'autres phénomènes qui le masquent, comme on l'a vu plus haut.

La présente invention a donc pour but de fournir un procédé de détection du sous-gonflage d'un pneumatique qui ne présente aucune des limitations exposées ci-dessus.

En particulier l'invention a pour but de fournir un procédé de détection du sous-gonflage d'un pneumatique capable de fournir quasiment en permanence une indication fiable quant à l'apparition d'une situation de sous-gonflage d'un pneumatique appartenant à un jeu de tels pneumatiques équipant un véhicule automobile.

La présente invention a aussi pour but de fournir un tel procédé qui permette d'identifier celui ou ceux des pneumatiques d'un tel jeu qui sont sous-gonflés.

La présente invention a encore pour but de fournir un tel procédé qui tienne compte des phénomènes dynamiques qui influent sur les pneumatiques de manière que ceux-ci ne masquent pas le sous-gonflage à mettre en évidence.

La présente invention a aussi pour but de fournir un tel procédé permettant de quantifier le sous-gonflage détecté.

On atteint ces buts de l'invention, ainsi que d'autres qui apparaîtront dans la suite de la présente description, avec un procédé de détection du sous-gonflage d'au moins un des pneumatiques équipant les roues d'un véhicule automobile comprenant au moins des première et deuxième paires de roues associées chacune à un essieu du véhicule, ce procédé étant du type suivant lequel on procède à la détection par une analyse des vitesses angulaires des roues. Suivant l'invention (a) on calcule une fonction linéaire des différences des puissances quadratiques des vitesses angulaires des roues des première et deuxième paires, respectivement, de la forme :

$$a_1(\Omega_1^2-\Omega_2^2)-a_2(\Omega_3^2-\Omega_4^2),$$

$a_1$ et $a_2$ étant des coefficients positifs proportionnels aux voies définies par les deuxième et première paires de roues, respectivement, $\Omega_1$, $\Omega_2$ d'une part, $\Omega_3$, $\Omega_4$, d'autre part étant les vitesses angulaires des roues de ces première et deuxième paires de roues respectivement, et (b) on tire de la position de la valeur de la fonction par rapport à au moins une valeur prédéterminée, une indication quant à la présence éventuelle d'un pneumatique sous-gonflé sur l'un des essieux.

Comme on l'expliquera en détail dans la suite, les différences de valeurs quadratiques utilisées permettent de s'affranchir des erreurs dues aux valeurs de vitesse angulaire non quadratiques exploitées dans la technique antérieure.

Suivant une mise en oeuvre avantageuse du procédé de détection selon l'invention, on utilise un critère de détection CR1 de la présence d'un pneumatique sous-gonflé tiré de la fonction linéaire formulée ci-dessus et de la forme :

$$CR1 \ = \ k_1[a_1(\Omega_1^2-\Omega_2^2)-a_2(\Omega_3^2-\Omega_4^2)]/\Omega_{ref}^2,$$

où $k_1$ est un coefficient de gain, $\Omega_{ref}$ une vitesse angulaire de référence, $a_1$ et $a_2$ les voies des deuxième et première paires de roues, normées par la voie moyenne.

On utilise aussi un deuxième critère de détection CR2 de la forme :

$$CR2 = k_2[\cos\alpha_1(\Omega_1 + \Omega_2)-\cos\alpha_2(\Omega_3 + \Omega_4)]/\Omega_{ref},$$

$k_2$ étant un coefficient de gain, et on tire de la valeur de ce critère CR2 une indication complémentaire que l'on combine avec celle fournie par le premier critère CR1 pour identifier au moins un pneumatique sous-gonflé.

On exploite ces deux critères après application de corrections de certains phénomènes dynamiques.

Suivant une première forme du procédé selon l'invention, on déduit des positions des valeurs de chaque critère par rapport à des seuils prédéterminés, la position d'un pneumatique sous-gonflé.

Suivant une deuxième forme du procédé selon l'invention, on calcule pour chaque pneumatique associé à des coefficients prédéterminés Ai et Bj, la valeur d'une combinaison linéaire des critères corrigés, de la forme :

$$Ai.CR1_{corrigé} + BJ.CR2_{corrigé}$$

et on déduit de la position de la valeur de cette combinaison linéaire par rapport à un seuil prédéterminé, un éventuel état de sous-gonflage du pneumatique associé.

Suivant une troisième forme du procédé selon l'invention, on tire de la valeur de la combinaison linéaire, une estimation de la valeur de la pression du pneumatique.

D'autres caractéristiques et avantages du procédé de détection suivant l'invention apparaîtront à la lecture de la description qui va suivre et à l'examen du dessin annexé, dans lequel :

Au dessin annexé, donné seulement à titre d'exemple :

– la figure 1 est une vue en plan schématique d'un véhicule automobile, utile à la compréhension de l'invention,

– la figure 2 est un graphe qui illustre l'amélioration de la précision de la détection obtenue par le procédé suivant l'invention,

– la figure 3 est un diagramme fonctionnel illustrant le procédé de détection suivant l'invention,

– la figure 4 est un schéma d'un dispositif pour la mise en oeuvre de l'invention,

– la figure 5 est un logigramme d'un algorithme de détection de pneumatiques sous-gonflés utilisable dans le procédé suivant l'invention,

– la figure 6 est un logigramme d'un algorithme de localisation de pneumatiques sous-gonflés et d'estimation du sous-gonflage de ces pneumatiques, et

– la figure 7 est un logigramme d'une variante préférée du logigramme de la figure 6.

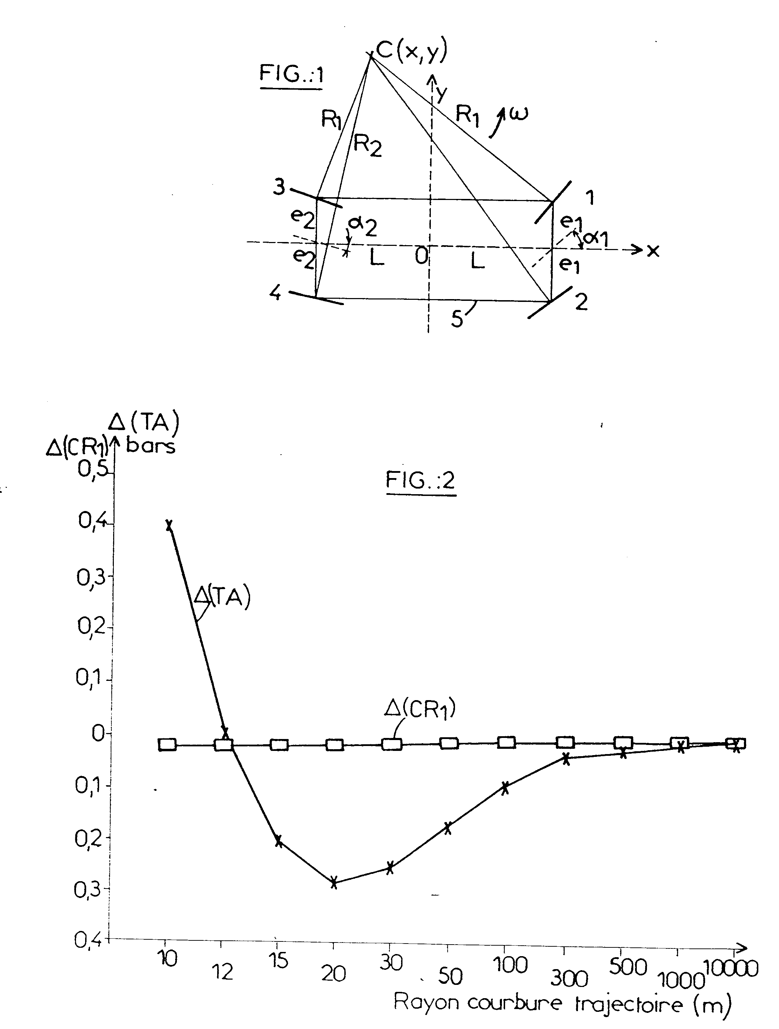

On se réfère à la figure 1 du dessin annexé où l'on a schématisé un véhicule automobile 5 muni de quatre roues 1, 2, 3, 4 réparties en deux trains ou essieux, avant (1,2) et arrière (3, 4), et équipées de quatre pneumatiques dont l'invention vise à surveiller l'état de gonflage, les roues gauches étant repérées par des indices impairs. Les points de tangence des roues avec le sol sont repérés dans un système de coordonnées $(x, o, y)$ dont l'axe des abscisses est confondu avec l'axe de symétrie longitudinal du véhicule alors que l'axe des ordonnées est perpendiculaire au précédent au point milieu de l'empattement $2L$. Les repères 1, 2 désignent les roues avant de demi-voie $e_1$ et les repères 3, 4 désignent les roues arrière, de demi-voie $e_2$.

Dans ce système de coordonnées, le véhicule 5 suivant une trajectoire quelconque, présente à tout instant un centre instantané de rotation C de coordonnées $(x,y)$. Si l'on désigne par $R_1, R_2, R_3, R_4$ les rayons de giration des roues 1, 2, 3, 4 par rapport à ce centre instantané de rotation, par $V_1, V_2, V_3, V_4$ les vitesses tangentielles au sol des roues 1, 2, 3, 4 et par $\Omega$ la vitesse angulaire instantanée du véhicule autour du centre de rotation C, on peut écrire les relations suivantes :

$$(X-L)^2 + (Y-e_1)^2 = R_1^2 = (V_1/\Omega)^2 \text{ car } V_1 = R_1\Omega$$

$$(X-L)^2 + (Y-e_1)^2 = R_2^2 = (V_2/\Omega)^2 \text{ car } V_2 = R_2\Omega$$

$$(X + L)^2 + (Y-e_2)^2 = R_3^2 = (V_3/\Omega)^2 \text{ car } V_3 = R_3\Omega$$

$$(X + L)^2 + (Y-e_2)^2 = R_4^2 = (V_4/\Omega)^2 \text{ car } v_4 = {}_{R4}\Omega$$

En éliminant X, Y et L entre ces équations on tire la relation :

$$(V_1^2-V_2^2)e_2-(V_3^2-V_4^2)e_1 = 0 \quad (I)$$

On observe que cette relation reste constamment vérifiée, quelle que soit la vitesse linéaire au sol des roues, la trajectoire suivie par le véhicule et l'état de gonflage des pneumatiques.

Par ailleurs, si on désigne par $r_1, r_2, r_3, r_4$, les rayons de roulement, fonctions notamment du gonflage des pneumatiques, des roues 1, 2, 3, 4, et par $\Omega_1, \Omega_2, \Omega_3, \Omega_4$ les vitesses angulaires de ces roues, respectivement, on sait que ces grandeurs sont liées par les relations :

$$V_i = r_i\Omega_i, \text{ i variant de 1 à 4.}$$

Par substitution dans la relation (I) ci-dessus il vient :

$$(r_1^2\Omega_1^2-r_2^2\Omega_2^2)e_2-(r_3^2\Omega_3^2-r_4^2\Omega_4^2)e_1 = 0$$

En l'absence de tout sous-gonflage et de phénomènes dynamiques, on peut estimer que :

$$r_1 = r_2 = r_3 = r_4 = r$$

La relation précédente se simplifie et devient

alors:

$$(\Omega_1^2-\Omega_2^2)e_2-(\Omega_3^2-\Omega_4^2)e_1 = 0 \quad (II)$$

Si par contre l'un des rayons $r_i$ s'écarte de la valeur $\underline{r}$ définie ci-dessus du fait d'un sous-gonflage de la roue de rayon $r_i$, l'équilibre des deux membres de la relation (II) n'est plus assuré et on a :

$$(\Omega_1^2-\Omega_2^2)e_2-(\Omega_3^2-\Omega_4^2)e_1 \neq 0$$

Il est clair alors que tout écart de la valeur du premier membre de la relation (II) par rapport à zéro est significatif d'une variation d'un ou plusieurs des rayons de roulement $r_1, r_2, r_3, r_4$, attribuable à une variation de pression dans un ou plusieurs des pneumatiques correspondants, en l'absence de toute autre cause de variation des rayons de roulement.

Une valeur positive de cette fonction, due à un accroissement des vitesses angulaires $\Omega_1$ et/ou $\Omega_4$ est ainsi significative d'un dégonflage d'au moins un des pneumatiques des roues 1 ou 4, tandis qu'une valeur négative de la fonction, due à un accroissement des vitesses angulaires $\Omega_2$ et/ou $\Omega_3$ est significative d'un dégonflage d'un des pneumatiques des roues 2 ou 3. On peut donc constituer un premier critère $CR_1$ de détection d'un sous-gonflage d'au moins un des pneumatiques à partir de cette fonction :

$$CR_1 = k_1[a_1(\Omega_1^2-\Omega_2^2)-a_2(\Omega_3^2-\Omega_4^2)]/\Omega_{ref}^2 \quad (III)$$

avec :

– $a_1 = \dfrac{e_2}{e}$ et $a_2 = \dfrac{e_1}{e}$, e mesurant la demi-voie, moyenne $(e_1 + e_2)/2$ du véhicule,

– $\Omega_{ref}$ = vitesse angulaire de référence des roues du véhicule, que l'on peut prendre égale à la moyenne des vitesses angulaires des roues non menées, par exemple,

– $k_1$ = coefficient de gain.

Il est clair que, dans un véhicule automobile typique, les coefficients $a_1$ et $a_2$ sont très voisins de 1 et donc assimilables à cette valeur, en première approximation.

On notera que la relation (III), ainsi modifiée par rapport à la relation (II), présente un caractère adimensionnel et indépendant de la vitesse du véhicule, ce qui accroît encore la validité du critère. Ce critère, établi à partir d'équations tenant compte de la position exacte du centre instantané de rotation du véhicule, et donc des trajectoires effectivement suivies par les roues de ce véhicule, est délivré de l'imprécision qui affecte les critères de la technique antérieure, imprécision qui résulte d'une approximation sur les trajets des roues diagonalement opposées.

Les graphes de la figure 2 illustrent à cet égard les variations du critère CR1 brut, suivant l'invention, et d'un critère de la technique antérieure (TA) tous deux normalisés en pression, en fonction du rayon de courbure de la trajectoire du véhicule, pour un véhicule circulant à une vitesse déterminée suffisamment basse pour ne pas tenir compte de l'accélération transversale et comprenant un pneumatique sous-gonflé ou non. Le critère de la technique antérieure, comme on l'a vu plus haut, fait intervenir la différence des valeurs de trajets ou de vitesses angulaires des roues des deux diagonales du jeu de pneumatiques. On observe que le rayon de courbure de la trajectoire est pratiquement sans influence sur la valeur du critère CR1 alors qu'il influe considérablement sur le critère TA de la technique antérieure. L'erreur sur TA peut atteindre 0,3 à 0,4 bar, soit une variation du même ordre de grandeur que celle attribuable au sous-gonflage à détecter. Il apparaît donc que le critère CR1 suivant l'invention présente l'avantage d'être indépendant de la géométrie de la trajectoire suivie par le véhicule.

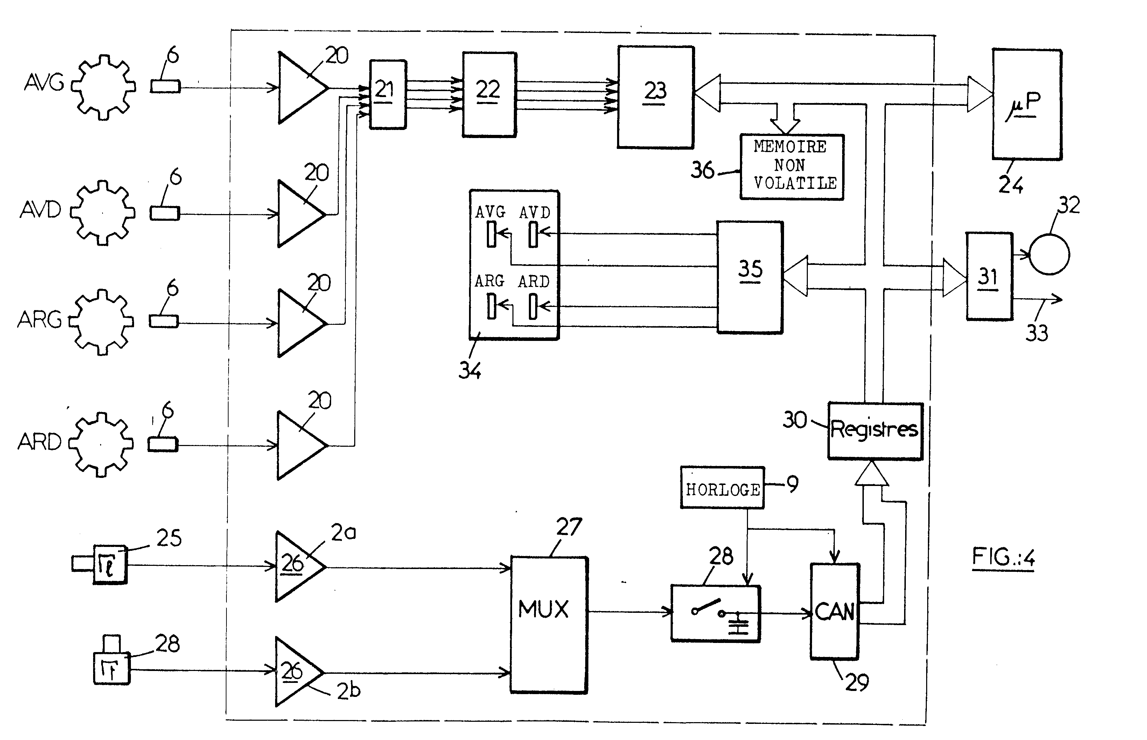

Ainsi, par la seule prise en compte du critère CR1 suivant l'invention, éventuellement corrigé pour compenser des effets d'accélération transversale et de transferts de charge susceptibles de masquer le phénomène de sous-gonflage à détecter, comme on le verra plus loin, il est possible d'établir un diagnostic quant à l'état de gonflage du jeu de pneumatiques équipant un véhicule. Ce critère permet en outre de déterminer dans quelle diagonale du train de pneumatiques se trouve un pneumatique en état de sous-gonflage. Une alarme peut alors être déclenchée pour alerter le conducteur. On décrira plus loin, en liaison avec la figure 4, des moyens de mise en oeuvre de cette alarme.

La détection ainsi opérée peut suffire pour assurer la sécurité du conducteur et le bon fonctionnement du véhicule, pour ce qui concerne le jeu de pneumatiques et l'incidence du gonflage de ceux-ci sur leur vitesse d'usure et sur la prévention d'un éclatement à grande vitesse. On peut souhaiter cependant aller plus loin et offrir au conducteur une identification précise du pneumatique en état de sous-gonflage. A cet effet l'invention utilise un deuxième critère permettant de lever l'indétermination de l'indication fournie par le premier critère en ce qui concerne la position du ou des pneumatiques défaillants. En cumulant les indications fournies par les deux critères, on détecte sans ambiguïté un ou deux pneumatique(s) sous-gonflé(s), sauf s'ils sont tous les deux d'un même côté du véhicule.

Le deuxième critère CR2 utilisé à cet effet, dans sa forme brute non corrigée de phénomènes susceptibles de masquer le sous-gonflage à mettre en évidence, est de la forme :

$$d_1(\Omega_1 + \Omega_2)\text{-}d_2(\Omega_3 + \Omega_4)$$

où $d_1$, $d_2$, sont des coefficients qui, suivant un mode de réalisation de l'invention, sont tels que $d_1 = \cos\alpha_1$ et $d_2 = \cos\alpha_2$ avec $\alpha_1$ et $\alpha_2$, angles moyens de braquage des roues avant et arrière (voir figure 1).

Bien entendu, si le véhicule n'a que deux roues directrices, $\cos\alpha_2 = 1$.

De préférence le critère CR2 prend la forme suivante :

$$CR2 = k_2[\cos\alpha_1(\Omega_1 + \Omega_2)\text{-}\cos\alpha_2(\Omega_3 + \Omega_4)\Omega_{ref} \quad (IV)$$

avec $k_2$ : coefficient de gain.

Ce critère CR2 compare la vitesse angulaire moyenne des roues du train avant à celle du train arrière en " ramenant " ces vitesses sur l'axe longitudinal du véhicule par les coefficients $\cos\alpha_1$ et $\cos\alpha_2$. Utilisé seul, il permet de détecter le sous-gonflage et/ou la surcharge d'un train, avant ou arrière, de pneumatiques. En ce qui concerne le sous-gonflage, on observe qu'une valeur positive de ce critère est significative d'un sous-gonflage sur le train avant alors qu'une valeur négative incrimine le train arrière.

Ainsi, suivant la présente invention, les quatre combinaisons possibles des signes des critères CR1 et CR2, identifient chacune sans ambiguïté un pneumatique sous-gonflé particulier.

Suivant un autre mode de mise en oeuvre du procédé selon l'invention, on exploite plutôt les positions des valeurs des deux critères par rapport à des seuils positifs et/ou négatifs, différents donc de zéro. On filtre ainsi certaines perturbations susceptibles de diminuer la fiabilité du procédé.

Suivant encore une autre mise en oeuvre du procédé selon l'invention, que l'on décrira en détail dans la suite, on calcule la valeur d'une combinaison linéaire des valeurs des deux critères, en utilisant des coefficients spécifiques à chaque roue et on déduit de la valeur de la combinaison une estimation de la pression régnant dans le pneumatique associé.

L'utilisation des critères CR1 et CR2 bruts tels que définis ci-dessus n'est cependant pas susceptible de donner des résultats satisfaisants dans de nombreuses situations où le comportement du véhicule est influencé par des phénomènes tels que : transferts de charge de certaines roues sur d'autres, montée ou descente, accélération transversale en virage, accélération ou décélération du véhicule, glissement ou patinage de certaines roues, etc...

En effet, comme on l'a mentionné plus haut, les variations de rayons de roulement des pneumatiques induites par de tels phénomènes dynamiques sont d'un ordre de grandeur supérieures à celles induites par une baisse de pression provoquant un sous-gonflage justifiant une alerte du conducteur.

Aussi est-on conduit à améliorer les résultats obtenus à l'aide des critères définis ci-dessus en introduisant dans ceux-ci des corrections des phénomènes dynamiques qui rendent ces critères efficaces en toutes circonstances.

L'équilibre autour de zéro du critère CR1 brut défini par la relation (III) ci-dessus est sensible à l'accélération transversale $\Gamma_t$ du véhicule à cause des transferts de charge et de l'angle de dérive des pneumatiques. Sa sensibilité dépend par ailleurs assez linéairement de la vitesse angulaire de référence $\Omega_{ref}$. On est conduit à un critère corrigé de la forme :

$$CR1 \text{ corrigé } = (1 + k_v.\Omega_{ref})(CR1 + k_\Gamma.\Gamma_t) \quad (V)$$

avec :

– $\Gamma_t$ = accélération transversale (estimée ou mesurée)

– $k_\Gamma$, $k_v$, coefficients correcteurs (ajustés expérimentalement).

De même, le critère CR2, s'il n'est pas sensible à l'effet de virage et à l'accélération transversale, doit être corrigé de transferts de charge longitudinaux ou de glissements de pneumatiques sur le sol, en faisant intervenir l'accélération longitudinale $\Gamma_l$ et la vitesse de référence $\Omega_{ref}$. Ainsi calcule-t-on :

CR2 corrigé =

$$CR2brut + b_1.\Omega_{ref}^2 + b_2.\Omega_{ref} + c_1.\Gamma_l + c_2\Gamma_l^2 \quad (VI)$$

avec $b_1$, $b_2$, $c_1$, $c_2$, coefficients correcteurs ajustés expérimentalement. Dans des versions simplifiées, un ou plusieurs de ces coefficients peuvent être annulés, en particulier $b_2$ et $c_2$.

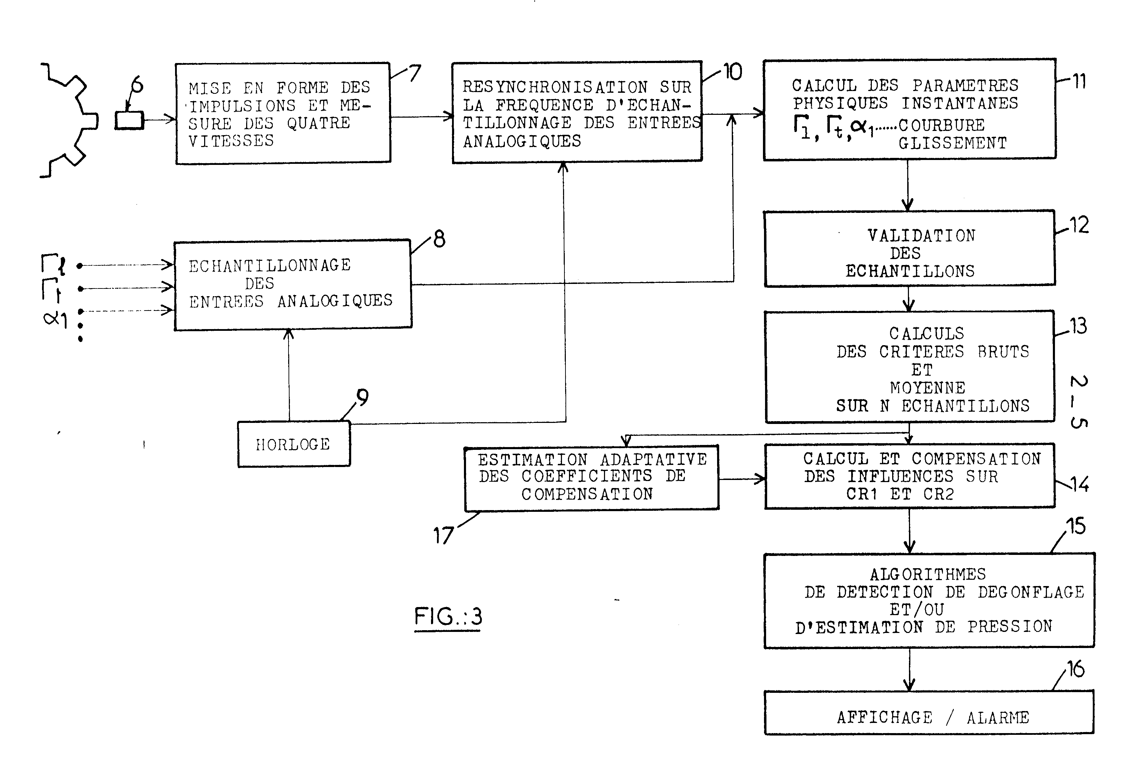

Ayant ainsi explicité les principes qui sous-tendent le procédé de détection de sous-gonflage d'un pneumatique, suivant l'invention, on décrit, à l'aide du diagramme fonctionnel de la figure 3, un mode de mise en oeuvre des différentes étapes de ce procédé, donné à titre d'exemple seulement.

Quatre capteurs, de vitesse tels que le capteur 6, délivrent à un bloc 7 des signaux représentatifs des vitesses angulaires $\Omega_i$ (i = 1 à 4) des roues associées à ces capteurs. Classiquement, les capteurs étant par exemple du type à réluctance magnétique variables, ces signaux sont constitués par des trains d'impulsions dont la fréquence est proportionnelle à la vitesse angulaire de la roue associée. Ces trains d'impulsions sont mis en forme et traités dans le bloc 7 qui délivrent des signaux asynchrones représentatifs de ces vitesses $\Omega_i$. Parallèlement des capteurs analogiques d'accélération longitudinale $\Gamma_l$, éventuellement d'accélération transversale $\Gamma_t$, d'angle de braquage des roues, $\alpha_1$, $\alpha_2$, ou d'angle de volant, etc... délivrent des signaux analogiques qui sont échantillonnés dans un bloc 8, par une horloge 9. Celle-ci commande aussi un bloc 10 pour resynchroniser les mesures de vitesses $\Omega_i$ sur la même fréquence que les signaux analogiques délivrés par le bloc 8. Les sorties des blocs 7 et 8 sont délivrées à un bloc 11 symbolisant l'étape du procédé dans laquelle sont calculés les paramètres physiques instantanés, $\Gamma_l$, $\Gamma_t$, $\alpha_1$, $\alpha_2$, la courbure, le glissement etc... et les vitesses $\Omega_i$ et $\Omega_{ref}$. Les échantillons de paramètres physiques ainsi formés sont ensuite délivrés à un bloc 12 de validation des échantillons, par comparaison de, ces échantillons à des seuils d'admissibilité, par exemple. Les échantillons validés servent ensuite, dans le bloc 13, au calcul des critères bruts CR1, CR2, et au calcul de valeurs moyennes des paramètres physiques, tous identifiés à leurs valeurs moyennes sur $\underline{n}$ échantillons. Les critères bruts ainsi calculés sont corrigés dans un bloc 14 où sont calculées les compensations d'influence prévues dans les formules (V) et (VI) ci-dessus, à l'aide éventuellement d'une estimation adaptative des coefficients à utiliser (bloc 17).

Des algorithmes de détection et/ou d'identification de pneumatiques sous-gonflés et/ou, comme on le verra plus loin, d'estimation de la pression dans les pneumatiques, sont alors appliqués aux critères compensés dans le bloc 15. En fonction des résultats des traitements exécutés dans le bloc 15, on commande alors des moyens (16) d'alarme visuelle ou sonore et/ou d'affichage de pression pour l'information du conducteur du véhicule.

Dans le procédé décrit ci-dessus, on prévoit un échantillonnage à une fréquence relativement élevée, de 20 Hz par exemple. Ainsi l'élimination instantanée de certains échantillons non valides (bloc 12) permet de conserver une séquence de $\underline{n}$ échantillons, éventuellement non consécutifs, sans rejet d'un ensemble d'échantillons collectés par exemple pendant plusieurs secondes. Ceci autorise ensuite les calculs de valeurs moyennes nécessaires, sans que le conducteur ne soit jamais privé d'informations sur l'état de gonflage des pneus du véhicule, contrairement à ce qui était prévu dans certains procédés de la technique antérieure.

On décrit maintenant un mode de réalisation d'un dispositif pour la mise en oeuvre du procédé suivant l'invention, représenté schématiquement à la figure 4. Il est bien entendu que ce dispositif n'est décrit qu'à titre d'exemple et que bien d'autres pourraient être choisis par l'homme de métier pour mettre en oeuvre le procédé de détection décrit ci-dessus.

Sur ce schéma apparaissent les quatre capteurs 6 de vitesse angulaire déjà mentionnés en liaison avec la figure 3. Dans un véhicule équipé d'un dispositif d'antiblocage des roues, ces capteurs seront communs avec ceux de ce dispositif, solution dont on a déjà noté le caractère économique. Dans un véhicule non équipé d'un dispositif d'antiblocage des roues, on pourra équiper les fusées de support des roues de roulements dits " instrumentés " équipés de moyens permettant de délivrer, de manière économique, un signal représentatif de la vitesse angulaire de la roue. A titre d'exemple d'un tel roulement on peut citer celui décrit dans le brevet français No. 2 599 794 de la Société SNR ROULEMENTS.

Dans le cas de capteurs de vitesse angulaire classiques à réluctance variable délivrant un signal d'allure sinusoïdale, une mise en forme du signal est nécessaire en vue de son traitement par des moyens numériques. Des bascules de Schmitt 20 sont utilisées à cet effet. Des prédiviseurs 21 peuvent être prévus pour adapter le signal au nombre d'impulsions par tour de roue. Des circuits d'interruption 22 commandent la transmission successive des informations de vitesses de roue à un circuit de mesure de temps 23. Celui-ci peut être constitué par le circuit à 16 bits référencé AM 9513 dans les catalogues de la Société ADVANCED MICRODEVICES, par exemple. Ce circuit permet de mesurer avec une grande précision les périodes des divers signaux de vitesse de roue pour transmettre ces informations à un microprocesseur 24, qui peut être constitué par le microprocesseur référencé 80186 dans les catalogues de la Société INTEL.

Parallèlement, un accéléromètre 25 convenablement agencé dans le véhicule, délivre un signal analogique représentatif de l'accélération longitudinale $\Gamma_l$ à un amplificateur 26 dont la sortie est connectée à une entrée d'un multiplexeur 27. D'autres capteurs tels que 28 fournissent les autres paramètres physiques éventuellement utilisés, $\Gamma_t$, $\alpha_1$, $\alpha_2$, etc...

Le multiplexeur 27 sélectionne les voies analogiques et les connecte sélectivement à un échantillonneur-bloqueur 28 dont la sortie est numérisée dans un convertisseur analogique-numérique 29 (CAN). L'horloge 9 cadence l'échantillonneur 28 et le CAN 29. Des registres tampons assurent l'interfaçage entre la sortie du convertisseur 29 et le microprocesseur 24.

Celui-ci exécute les traitements prévus dans les blocs 10 à 15 et 17 du diagramme de la figure 3. Les résultats de ces traitements permettent d'exciter de manière appropriée des circuits de commande d'alarme 31 visuelle (32) ou sonore (33), à synthèse vocale par exemple. Quand le microprocesseur calcule aussi, comme on le verra plus loin, une estimation de la pression dans un pneumatique sous-gonflé, l'affichage de cette pression peut être assuré par le moyen d'un afficheur (34) à barrettes de diodes ("bargraph") par exemple, commandé par un circuit d'interface approprié 35.

On décrit maintenant divers algorithmes de détection de pneumatique dégonflé et/ou d'estimation de la pression du pneumatique dégonflé utilisables dans la mise en oeuvre du procédé selon l'invention, étant entendu que l'on tiendra pour équivalents dans la suite les mots "dégonflé" et "sous-gonflé".

Suivant un premier algorithme, très simple, on tire de la position de la valeur absolue du premier critère (CR1) par rapport à un seuil prédéterminé de préférence non nul, une indication de la présence éventuelle d'au moins un pneumatique dégonflé dans le jeu de pneumatiques équipant le véhicule. Cette comparaison sert à déclencher une alarme pour prévenir le conducteur de ce véhicule. L'algorithme très simple utilisé ne permet évidemment pas de préciser la position du ou des pneumatiques défaillants. Cette position peut être précisée en comparant le critère CR1 à des seuils positif et négatif, pour déterminer la diagonale incriminée.

Pour réduire la probabilité d'intervention de fausses alarmes, on soumet de préférence la valeur du critère CR1 à un filtrage passe-bas. Le temps de réponse du filtre utilisé peut être réglé entre 15 secondes et 45 secondes, par exemple.

L'utilisation du critère CR1 dans cet algorithme est préférée bien que, en principe, l'algorithme puisse être mis en oeuvre tout aussi bien avec le critère CR2, qui permet de préciser le train de pneumatiques incriminé.

Suivant un deuxième algorithme, on utilise conjointement les valeurs des critères CR1 et CR2. Comme on le verra dans la suite, il est alors possible de détecter et de localiser le dégonflage de l'une quelconque des quatre roues ou, dans tous les cas, de deux roues dégonflées parmi les quatre, sauf si celles-ci se situent d'un même côté du véhicule.

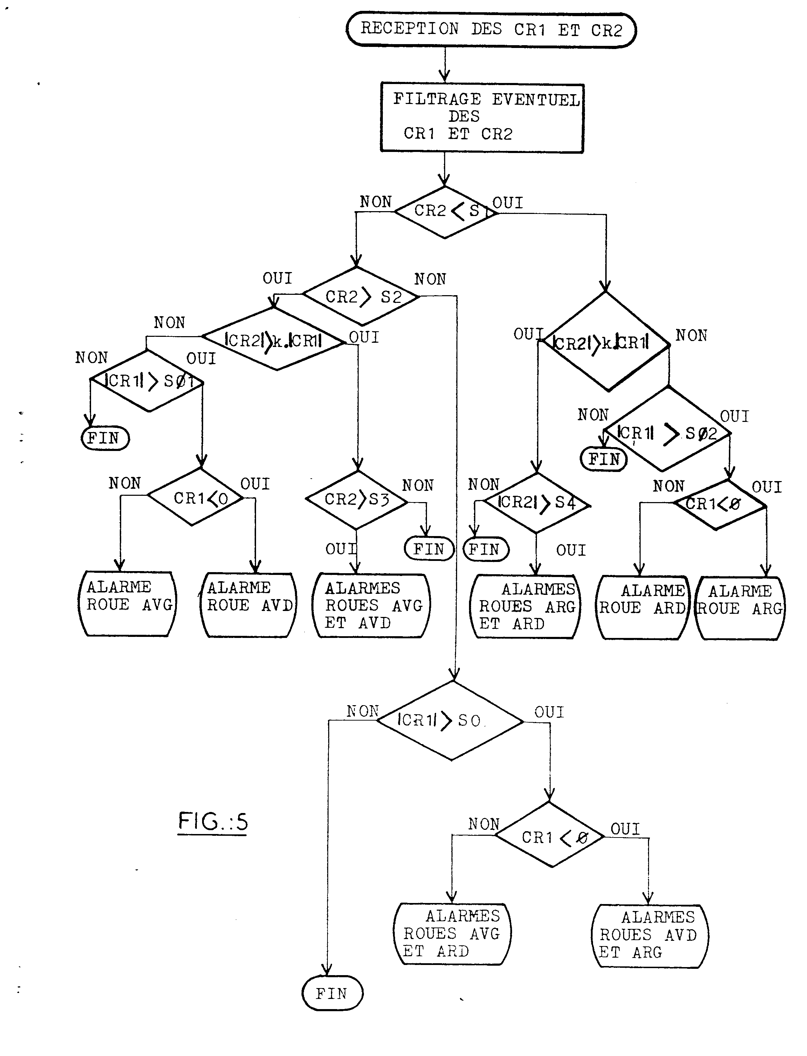

L'organigramme de l'algorithme utilisé est représenté à la figure 5. Les critères CR1 et CR2 utilisés dans cet algorithme sont de préférence, comme dans le cas précédent, filtrés. La valeur du critère CR2 est comparée à deux seuils, l'un $S_1$ négatif et l'autre $S_2$ positif, qui permettent de localiser un dégonflage éventuel sur l'essieu avant (CR2 > $S_2$) ou sur l'essieu arrière (CR2 < $S_1$). Si CR2 est compris entre $S_1$ et $S_2$, on ne tient compte que du critère CR1.

Après avoir déterminé la présence possible d'un dégonflage sur l'essieu avant ou sur l'essieu arrière, on compare la valeur absolue du critère CR2 à celle du critère CR1, corrigée d'un coefficient k exprimant un rapport de sensibilité entre les deux critères.

Si CR2 est plus grand en valeur absolue que k.CR1 en valeur absolue, on compare ensuite CR2 à un seuil $S_3$ ou à un seuil $S_4$, suivant la probabilité de présence d'un pneumatique dégonflé sur l'essieu avant ou sur l'essieu arrière respectivement. Si CR2 est plus grand que $S_3$, il y a declenchement d'une alarme "roues avant". Si la valeur absolue de CR2 est plus grande que $S_4$, il y a déclenchement d'une alarme "roues arrière".

Si CR2 est plus petit que k.CR1 en valeur absolue, on compare ensuite le critère CR1 à des seuils $S_{01}$, $S_{02}$, suivant la branche de l'organigramme dans laquelle on se trouve. Dans le cas où CR1 dépasse en valeur absolue le seuil de comparaison, une alarme conditionnée par le signe du critère CR1 permet de localiser la roue en défaut de sous-gonflage.

Comme on l'a vu plus haut, lorsque le critère CR2 est compris entre les seuils $S_1$ et $S_2$, seul le critère CR1 est pris en compte. Celui-ci est d'abord comparé, en valeur absolue, à $S_0$. S'il dépasse ce seuil, une alarme conditionnée par son signe signalera un défaut de gonflage soit sur l'une au moins des roues avant gauche (AVG) et arrière droite (ARD) s'il est négatif, soit sur l'une au moins des roues avant droite (AVD) et arrière gauche (ARG) s'il est positif.

Dans les autres cas, aucune alarme n'est déclenchée.

Bien entendu, on pourrait regrouper en une alarme générale, suivant une fonction logique OU, toutes les alarmes précédemment décrites, dans le cas où une telle alarme générale serait souhaitée.

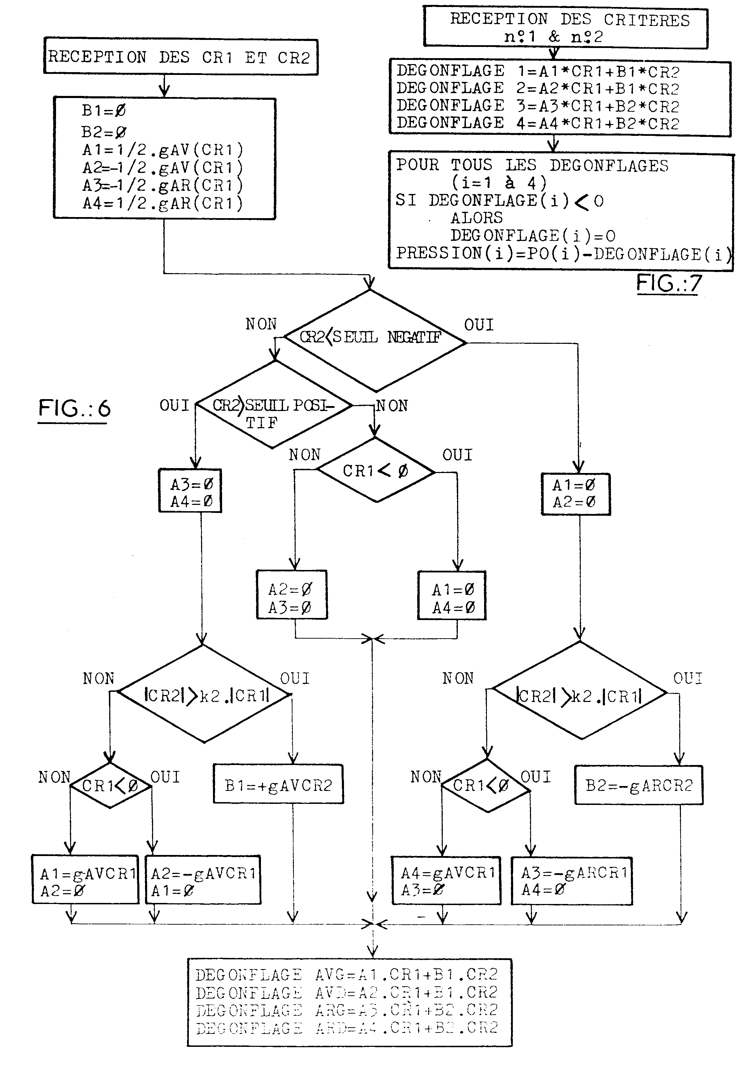

Il apparaît que l'algorithme décrit en liaison avec la figure 5 donne des indications plus précises que l'algorithme précédemment décrit, en ce qui concerne la position de la ou des roues sous-gonflées. Il ne permet pas cependant d'estimer l'importance du sous-gonflage de ces roues. C'est une estimation de ce sous-gonflage qu'apporte un troisième algorithme utilisable dans le procédé suivant l'invention, cet algorithme étant illustré par le logigramme de la figure 6.

L'algorithme fait intervenir des coefficients A1 à A4 et B1, B2 définis de la manière suivante :

$$A1 = 1/2.gAV(CR1)$$
$$A2 = -1/2.gAV(CR1)$$
$$A3 = -1/2.gAR(CR1)$$
$$A4 = 1/2.gAR(CR1)$$
$$B1 = + gAV(CR2)$$
$$B2 = -gAR(CR2)$$

les gains $gAV(CR_i)$ et $gAR(CR_i)$ étant des coefficients de normalisation en pression, dépendant de l'essieu qui porte la roue considérée et se rapportant aux critères $CR_i$ (i = 1 ou 2).

Les coefficients A1 à A4 font intervenir le critère CR1 avec un signe dépendant de la position de la roue et avec une amplitude dépendant des gains gAV ou gAR rapportés au critère CR1. L'influence de ces gains est fonction des chemins de passage dans des tests pratiqués à diverses étapes de l'algorithme. Dans certains chemins, certains des coefficients A1 à A4 sont annulés.

Les coefficients B1 et B2 font intervenir le critère CR2 avec un signe positif pour les roues avant et négatif pour les roues arrière, lorsque ce critère est validé par un test de comparaison de la valeur absolue du critère CR2 à celle du critère CR1, corrigé par un coefficient k2. Par ailleurs, comme il apparaît sur l'organigramme, ces coefficients B1 et B2 sont initialisés à 0. La valeur des coefficients B1 et B2 dépend bien entendu de la sensibilité en pression des roues avant et arrière, respectivement.

Suivant cet algorithme, le sous-gonflage de chacun des pneumatiques est ensuite estimé par le calcul d'une combinaison linéaire des critères CR1 et CR2, combinaison qui met en jeu des coefficients Ai et Bj conditionnés par différentes comparaisons opérées sur les deux critères et sur leurs signes, avant la réalisation de la combinaison. Les relations suivantes expriment le dégonflage estimé de chacun des pneumatiques AVG, AVD, ARG, ARD :

$$\text{dégonflage AVG} = A1.CR1 + B1.CR2$$
$$\text{dégonflage AVD} = A2.CR1 + B1.CR2$$
$$\text{dégonflage ARG} = A3.CR1 + B2.CR2$$
$$\text{dégonflage ARD} = A4.CR1 + B2.CR2$$

On remarquera qu'à tout coefficient Ai est associé un coefficient Bj tel que, pour i = 1 ou 2, Bj = B1 et pour i = 3 ou 4, Bj = B2. Ceci reflète le fait que le critère CR2, seul, ne distingue pas une roue "droite" d'une roue "gauche" .

La pression de chaque pneumatique peut être estimée par la différence entre une pression normale $P_0$ dans ce pneumatique et la valeur estimée de son dégonflage, telle qu'exprimée par les relations ci - dessus.

Une variante préférée de l'algorithme précédent est illustrée par le logigramme très simple de la figure 7. Suivant ce logigramme, on estime tout d'abord le dégonflage de chaque pneumatique en calculant une combinaison linéaire des critères CR1 et CR2 et en utilisant pour ce faire les coefficients de gain A1 à A4 et B1 et B2 définis ci-dessus. On remarquera cependant que les coefficients B1 et B2 ne sont pas cette fois-ci initialisés à 0. Lorsque des valeurs négatives de dégonflage sont trouvées, celles-ci sont remplacées par la valeur 0. On estime ensuite la pression dans chaque roue comme précédemment, par soustraction des valeurs de dégonflage trouvées, de la pression normale $P_0$. Les pressions ainsi calculées permettent de déclencher éventuellement des alarmes, roue par roue. Comme on l'a vu plus haut, un filtrage préalable permet d'éviter le déclenchement intempestif de ces alarmes.

Par ailleurs, le procédé suivant l'invention peut incorporer avantageusement des procédures d'apprentissage des rayons de roulement et d'auto-adaptativité des coefficients de correction utilisés.

Ainsi, lorsque la pression des pneumatiques a été réajustée et vérifiée dans une station-service, des moyens sont prévus pour informer le dispositif de ce que la pression a été réglée à la valeur nominale $P_0$. Il en est de même lors d'un changement de pneumatique ou de roue. Le dispositif déclenche alors une procédure de réétalonnage exécutée par le microprocesseur de ce dispositif. Cette procédure consiste en un apprentissage des développées de chacune des roues. Pour ce faire la procédure consiste d'abord à identifier les conditions de roulement du véhicule constantes du point de vue de la courbure de sa trajectoire, conditions qui doivent durer pendant un intervalle de temps suffisant pour autoriser la stabilisation thermique des pneumatiques et le déroulement des diverses opérations d'apprentissage. Cette procédure recherchera donc, soit une ligne droite, soit une trajectoire dont la courbure restera constante, sur une longueur suffisante, et plus petite qu'une tolérance prédéterminée compatible avec les différences de développées (ou de rayon de roulement) engendrées par des usures inégales de pneumatiques, des pneumatiques de types différents ou bien encore par des effets de charge. La valeur de chacun des rayons de roulement est déterminée par comparaison des vitesses angulaires de chaque roue à la moyenne des vitesses angulaires. Les quatre rayons de roulement (ou développées) ainsi déterminés sont mémorisés dans une mémoire non volatile 36 (voir figure 4) formant partie du dispositif. Les calculs ultérieurs de vitesse individuelle de roue utilisent ces rayons de roulement actualisés.

De même on pourra incorporer au procédé de détection suivant l'invention, une procédure d'adaptation continue en ligne des paramètres de compensation des influences indésirables (accélération longitudinale transversale, vitesse etc...) qui influent sur les corrections à appliquer aux critères bruts définis plus haut. On pourra ainsi tenir compte des évolutions du système dues à l'adhérence de la route, aux variations dues aux pneumatiques (types, usures) ou variations dues au véhicule (charges etc...).

Bien entendu l'invention n'est pas limitée au procédé décrit qui n'a été donné qu'à titre d'exemple. Ainsi on ne sortirait pas du cadre de l'invention en étendant ce procédé, illustré à l'aide d'un véhicule à deux essieux et quatre roues, à un véhicule comprenant un plus grand nombre d'essieux et de roues. De même les algorithmes décrits exploitent les critères CR1 et CR2 suivant certaines séquences de test. On pourrait concevoir des algorithmes exploitant ces critères suivant d'autres séquences.

## Revendications

1. Procédé de détection du sous-gonflage d'au moins un des pneumatiques équipant les roues d'un véhicule automobile comprenant au moins des première et deuxième paires de roues associées chacune à un essieu du véhicule, du type suivant lequel on procède à la détection par une analyse des vitesses angulaires des roues, caractérisé en ce que (a) on calcule une fonction linéaire des différences des puissances quadratiques des vitesses angulaires des roues des première et deuxième paires, respectivement, de la forme :

$$a_1(\Omega_1^2 - \Omega_2^2) - a_2(\Omega_3^2 - \Omega_4^2)$$

$a_1$ et $a_2$ étant des coefficients positifs proportionnels aux voies définies par les deuxième et première paires de roues, respectivement, $\Omega_1$, $\Omega_2$ d'une part, $\Omega_3$, $\Omega_4$, d'autre part étant les vitesses angulaires des roues de ces première et deuxième paires de roues respectivement, et (b) on tire de la position de la valeur de la fonction par rapport à au moins une valeur prédéterminée, une indication quant à la présence éventuelle d'un pneumatique sous-gonflé sur l'un des essieux.

2. Procédé conforme à la revendication 1, caractérisé en ce qu'on utilise un critère de détection (CR1) de la présence d'un pneumatique sous-gonflé tiré de ladite fonction linéaire et de la forme :

$$CR1 = k_1[a_1(\Omega_1^2 - \Omega_2^2) - a_2(\Omega_3^2 - \Omega_4^2)]/\Omega_{ref}^2$$

où $k_1$ est un coefficient de gain, $\Omega_{ref}$ une vitesse angulaire de référence.

3. Procédé conforme à la revendication 2, caractérisé en ce qu'on calcule une fonction linéaire des sommes des vitesses angulaires des roues des première et deuxième paires, respectivement, de la forme

$$d_1(\Omega_1 + \Omega_2) - d_2(\Omega_3 + \Omega_4)$$

où $d_1$ et $d_2$ sont des coefficients, et on tire de la position de la valeur de cette deuxième fonction par rapport à au moins une valeur prédéterminée, une indication complémentaire que l'on combine avec celle fournie par le premier critère pour identifier un pneumatique sous-gonflé.

4. Procédé conforme à la revendication 3, caractérisé en ce qu'on utilise un deuxième critère de détection (CR2) de la forme :

$$CR2 = k_2[d_1(\Omega_1 + \Omega_2) - d_2(\Omega_3 + \Omega_4)]/\Omega_{ref}$$

$k_2$ étant un coefficient de gain, et on tire de la valeur de ce critère (CR2) une indication complémentaire que l'on combine avec celle fournie par le premier critère (CR1) pour identifier au moins un pneumatique sous-gonflé.

5. Procédé conforme à la revendication 3 ou 4, caractérisé en ce que $d_1 = \cos\alpha_1$ et $d_2 = \cos\alpha_2$, $\alpha_1$ et $\alpha_2$ étant les angles moyens de braquage des roues des première et deuxième paires, respectivement.

6. Procédé conforme à l'une quelconque des revendications 3 à 5, caractérisé en ce qu'on utilise les valeurs des premier (CR1) et deuxième (CR2) critères après application de corrections de phénomènes dynamiques.

7. Procédé conforme à la revendication 6, caractérisé en ce qu'on utilise un premier critère corrigé de la forme :

$$CR1 \text{ corrigé} = (1 + k_v.\Omega_{ref})(CR1 + k_\Gamma.\Gamma_t)$$

où $\Gamma_t$ est l'accélération transversale du véhicule, $k_\Gamma$, $k_v$ des coefficients correcteurs.

8. Procédé conforme à l'une quelconque des revendications 6 et 7, caractérisé en ce qu'on utilise un deuxième critère corrigé de la forme :

$$CR2 \text{ corrigé} =$$
$$CR2 + b_1\Omega_{ref}^2 + b_2\Omega_{ref} + c_1.\Gamma_l + c_2.\Gamma_l^2$$

où $\Gamma_l$ est l'accélération longitudinale du véhicule, $b_1$, $b_2$, $c_1$, $c_2$ des coefficients correcteurs.

9. Procédé conforme à la revendication 8, caractérisé en ce qu'on déduit des signes des premier (CR1) et deuxième (CR2) critères corrigés, ainsi que des positions des valeurs de chaque critère par rapport à des seuils prédéterminés et de la position de la valeur absolue du deuxième critère (CR2) par rapport à celle du premier critère (CR1) affectée d'un coefficient multiplicateur, la position d'un pneumatique sous-gonflé.

10. Procédé conforme à la revendication 7, caractérisé en ce qu'on calcule, pour chaque pneumatique (i) associé à des coefficients (Ai) et (Bj), la valeur d'une combinaison linéaire des critères corrigés, de la forme :

$$Ai.CR1_{corrigé} + Bj.CR2_{corrigé}$$

et on déduit de la valeur de cette combinaison linéaire une estimation du sous-gonflage éventuel du pneumatique associé.

11. Procédé conforme à la revendication 10, caractérisé en ce qu'on détermine les coefficients (Ai) et (Bj) à utiliser dans chaque combinaison linéaire par des tests opérés sur les valeurs des premier (CR1) et deuxième (CR2) critères et sur la position relative de la valeur absolue du deuxième critère (CR2) par rapport à celle du premier critère (CR1), affecté d'un coefficient multiplicateur.

12. Procédé conforme à l'une quelconque des revendications 6 à 11, caractérisé en ce qu'on mesure et on échantillonne les vitesses angulaires des roues de manière asynchrone, on mesure et on échantillonne des grandeurs physiques utilisées dans la correction des critères bruts et on resynchronise les échantillons des mesures de vitesses angulaires par la fréquence d'échantillonnage des grandeurs physiques.

13. Procédé conforme à la revendication 12, caractérisé en ce qu'on valide instantanément les échantillons saisis, on calcule des critères bruts, et on corrige les critères bruts ainsi obtenus par des coefficients de correction tirés des grandeurs physiques mesurées.

14. Procédé conforme à la revendication 13, caractérisé en ce qu'on calcule des valeurs moyennes des échantillons valides tant pour le calcul des critères que pour le calcul des grandeurs physiques intervenant dans les corrections.

15. Procédé conforme à l'une quelconque des revendications 7 à 14, caractérisé en ce qu'on réalise une estimation adaptative des coefficients de correction utilisés.

16. Procédé conforme à l'une quelconque des revendications précédentes, caractérisé en ce qu'on pratique un apprentissage des rayons de roulement des roues sur une trajectoire de courbure constante et de longueur suffisante.

FIG.:1

FIG.:2

Rayon courbure trajectoire (m)

EP 0 466 535 A1

MISE EN FORME DES IMPULSIONS ET MESURE DES QUATRE VITESSES — 7

RESYNCHRONISATION SUR LA FREQUENCE D'ECHANTILLONNAGE DES ENTREES ANALOGIQUES — 10

CALCUL DES PARAMETRES PHYSIQUES INSTANTANES $\Gamma_1, \Gamma_t, \alpha_1 \cdots$ COURBURE GLISSEMENT — 11

6

ECHANTILLONNAGE DES ENTREES ANALOGIQUES — 8

$\Gamma_\ell$
$\Gamma_t$
$\alpha_1$

HORLOGE — 9

VALIDATION DES ECHANTILLONS — 12

CALCULS DES CRITERES BRUTS ET MOYENNE SUR N ECHANTILLONS — 13

2 - 5

ESTIMATION ADAPTATIVE DES COEFFICIENTS DE COMPENSATION — 17

CALCUL ET COMPENSATION DES INFLUENCES SUR CR1 ET CR2 — 14

ALGORITHMES DE DETECTION DE DEGONFLAGE ET/OU D'ESTIMATION DE PRESSION — 15

AFFICHAGE / ALARME — 16

FIG.:3

**FIG:4**

FIG.:5

EP 0 466 535 A1

RECEPTION DES CRITERES
n°1 & n°2

```
DEGONFLAGE 1=A1*CR1+B1*CR2
DEGONFLAGE 2=A2*CR1+B1*CR2
DEGONFLAGE 3=A3*CR1+B2*CR2
DEGONFLAGE 4=A4*CR1+B2*CR2
```

```
POUR TOUS LES DEGONFLAGES
        (i=1 à 4)
SI DEGONFLAGE(i)<0
    ALORS
        DEGONFLAGE(i)=0
PRESSION(i)=PO(i)-DEGONFLAGE(i)
```

FIG.:7

RECEPTION DES CR1 ET CR2

```
B1=∅
B2=∅
A1=1/2.gAV(CR1)
A2=-1/2.gAV(CR1)
A3=-1/2.gAR(CR1)
A4=1/2.gAR(CR1)
```

FIG.:6

NON — CR2<SEUIL NEGATIF — OUI

OUI — CR2>SEUIL POSI-TIF — NON

NON — CR1<∅ — OUI

A3=∅
A4=∅

A1=∅
A2=∅

A2=∅
A3=∅

A1=∅
A4=∅

NON — |CR2|>k2.|CR1| — OUI

NON — |CR2|>k2.|CR1| — OUI

NON — CR1<∅ — OUI

B1=+gAVCR2

NON — CR1<∅ — OUI

B2=-gARCR2

A1=gAVCR1
A2=∅

A2=-gAVCR1
A1=∅

A4=gAVCR1
A3=∅

A3=-gARCR1
A4=∅

```
DEGONFLAGE AVG=A1.CR1+B1.CR2
DEGONFLAGE AVD=A2.CR1+B1.CR2
DEGONFLAGE ARG=A3.CR1+B2.CR2
DEGONFLAGE ARD=A4.CR1+B2.CR2
```

Office européen
des brevets

**RAPPORT DE RECHERCHE EUROPEENNE**

Numero de la demande

EP 91 40 1629

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 777 611 (TASHIRO)<br>* Revendications; figures *<br>--- | 1 | B 60 C 23/00 |
| D,A | FR-A-2 568 519 (MICHELIN)<br>--- | | |
| D,A | EP-A-0 291 217 (SP TYRES)<br>----- | | |

**DOMAINES TECHNIQUES RECHERCHES (Int. Cl.5)**

B 60 C

Le présent rapport a été établi pour toutes les revendications

| Lieu de la recherche | Date d'achèvement de la recherche | Examinateur |
|---|---|---|
| LA HAYE | 20-10-1991 | PIRIOU J.C. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant

EPO FORM 1503 03.82 (P0402)